# EUROPEAN PATENT SPECIFICATION

(11) **EP 2 220 975 B1**
(45) Date of publication and mention of the grant of the patent: **24.08.2011**
(21) Application number: 10154377.5
(22) Date of filing: 23.02.2010
(51) Int. Cl.: A47J 36/02

(54) **Container or other manufactured article to be used with induction cookers**
Behälter oder anderer Artikel zum Gebrauch in Induktionsherden
Conteneurs ou autre article manufacturé pour utilisation avec plaques à induction

(30) Priority: 23.02.2009 IT BO20090103
(43) Date of publication of application: 25.08.2010
(73) Proprietor: TVS S.p.A, 61029 Urbino (PS) (IT)
(72) Inventor: Amadori, Stefano, 40122 Bologna (IT); Campari, Gianfranco Enrico, 40122 Bologna (IT); Bonetti, Ennio, 40122 Bologna (IT)
(74) Representative: Feltrinelli, Secondo Andrea

(56) References cited:
- WO-A-03/053104
- FR-A- 2 782 736

## Description

The present invention relates to containers or other manufactured articles to be used with electromagnetic induction cookers.

As it is known, thanks to its high heat conduction, aluminium is an excellent material for making pots or the like to be used on conventional ovens. Indeed, the pot made from aluminium promotes homogeneous cooking of the food products regardless of their shape or of their position on the bottom of the pot and, at the same time, it requires less intense heat sources with respect to other materials to reach cooking temperatures thus also ensuring an energy saving. Moreover, since aluminium avoids strong heat localizations, it ensures that the pots have a greater life span. Another characteristic that promotes the use of aluminium derives from its substantial lightness and from its high strength.

Although, as mentioned above, aluminium has been very popular for making containers to be used according to conventional cooking methods, it is however inadequate for making pots or the like to be used with induction cookers.

Induction cooker is the type of cooker that exploits the electromagnetic induction principle to heat the materials. In this type of cooker the heat is directly produced inside the container and, therefore, there is no use of any type of flame or heat exchanger.

This type of cookers has started to become very widespread in countries in which the cost of electric energy is not particularly high, and where, for safety reasons, the use of gas fuels are preferably avoided, for example, in seismic risk areas.

Induction cooker pots are currently on the market, which are made from steel or aluminium with the addition of layers of ferromagnetic material like ferritic steel or of steel discs pressed on the bottom of the of the pot.

An example of such kind of induction cooker pots is disclosed in FR-A-2782736. In this document, a cooking container is disclosed, in which the cooking container of cast aluminium comprises at least one surface coated with a cermet elettroconductive layer consisting of grains of a metal or of an elettroconductive alloy selected from iron, iron-based alloys and mixtures thereof, coated with a ceramic material chosen from metal oxides and mixtures thereof.

Such solutions, as well as causing production problems, can also undergo thermal gradients and an uneven heat distribution.

The purpose of the present invention is that of making containers containing Aluminium and that are suitable for being used for cooking on induction cookers.

The object of the present invention is a container or other manufactured article to be used with electromagnetic induction cookers, the essential characteristics of which are described in claim 1, and the preferred and/or auxiliary characteristics of which are described in claims 2-4.

In order to clarify the invention, example embodiments purely given for illustrative and not for limiting purposes are shown hereafter.

Hereafter, we shall describe the production of a material from a mixture of Al and Fe powders. In particular, different mixtures have been made containing different weight ratios of Al and Fe powders, as shall be illustrated hereafter. The materials obtained by the aforementioned mixtures were subsequently tested to evaluate their heating capability and their capability of heating water once arranged in contact with an induction plate. In order to better evaluate the present invention, the aforementioned heating values were compared to the heating values obtained by pots for induction cookers currently available on the market.

The materials were produced by mixing suitable amounts of Fe and Al powders in an agitator for about 8 minutes to avoid the production of lumps and to obtain a homogenous distribution of the powders, as confirmed by subsequent optical microscope analysis. The mixtures thus obtained were, then, poured into cylindrical moulds obtaining discs with a thickness of 6 mm and with a radius of 50 mm and compacted by exerting a pressure according to the composition. Once they had been pressed, the materials were oven heated for two hours at a temperature comprised between 180 and 200 C. The thermal treatment did not alter the density or the shape of the compacted product thus avoiding the need for subsequent mechanical machining steps. It should be noted how the procedure used does not depend on the shape of the mould and, therefore, it can be used for producing even complex shapes.

The different discs thus obtained were arranged over a commercial heat induction plate set to medium power. For each disc both the heating curve of the discs and the heating curve of 150 cc of water arranged in a beaker resting on the discs themselves were measured. By comparison, the same heating measurements were detected, in the same conditions, from pots currently on the market for induction heating.

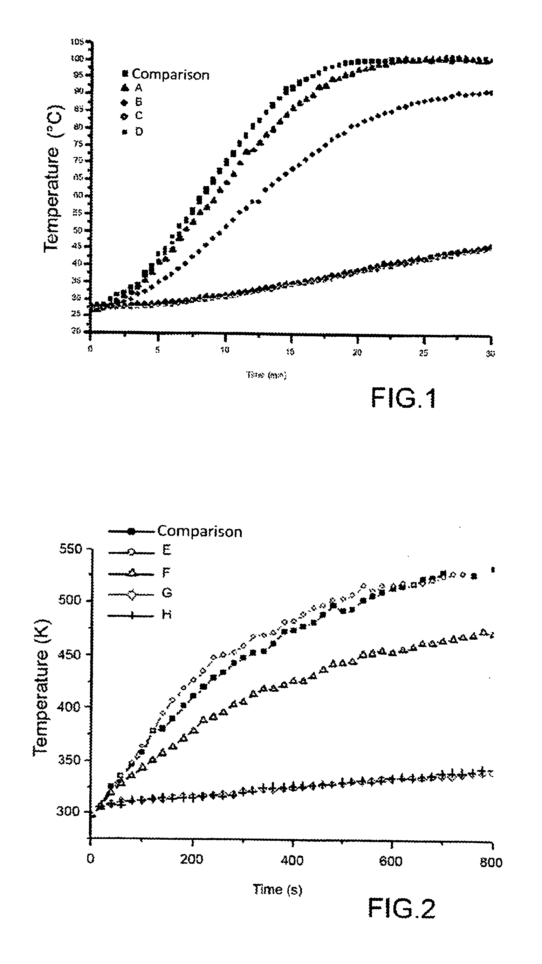

Figure 1 shows a graph of the heating curves of water according to the composition of the discs made as shown in table I.

**TABLE I**

| Disc | % by weight of Fe | % by weight of Al |
|---|---|---|
| A | 80 | 20 |
| B | 66 | 33 |
| C | 50 | 50 |
| D | 30 | 70 |

From the graph in figure 1 it can be understood that the compositions having a Fe content by weight that is the same as or more than 66% have a water heating curve that is approximate to that of pots currently on the market indicated with the word "comparison" and which are made with a plate of steel pressed on the aluminium bottom.

The minimum threshold of Iron, in order for the induction phenomenon to occur, derives from reaching the percolation lattice and it is indicated as the percolation threshold. As it should be known by a man skilled in the art, the percolation threshold is a general concept that refers to the distribution threshold of an element in a matrix of a compound for a certain physical phenomenon to occur in the compound itself. The percolation phenomenon is strictly of a geometrical nature and thus depends on the geometry of the grains of the powders and on their relative dimensions.

In this specific case, the percolation threshold is obtained when the density of the iron grains acting as a ferromagnetic material, is greater than a precise limit for heating to be obtained through magnetic induction. In the samples produced, such a percolation threshold is reached with a percentage of iron in the mixture equal to 66% by weight corresponding to a percentage of 40% in volume and 48% atomic.

As it may seem obvious, if instead of iron another ferromagnetic material is used, the percolation threshold varies depending, as said, strictly on the size characteristics of the materials used.

Other ferromagnetic materials which can be used in the present invention are for example FeSi, Fe oxides and ferritic steels.

Figure 2 shows a graph of the heating curves of the discs according to the composition as shown in table 2.

**TABLE II**

| Disc | % by weight of Fe | % by weight of Al |
|---|---|---|
| E | 80 | 20 |
| F | 66 | 33 |
| G | 50 | 50 |
| H | 30 | 70 |

Even in this case, the discs with a higher Fe content have a heating curve close to that obtained with the compared materials.

A second method for producing the material object of the present invention foresees hot pressing of the powder mixture. The material is compressed slowly in the mould whereas it is kept at a temperature of at least 200°C. In particular, during the compression, the material is kept at a temperature comprised between 200 and 450°C and, in any case, dependent upon the deformation speed and on the shape of the mould. Such a method allows better compacting and a better ductility of the compacted product obtained.

Moreover, a third method foresees that ferromagnetic powders are added to a molten Al, mixing is carried out until the distribution of powders is homogenised and immediately afterwards the casting of the material obtained is carried out, thus ensuring high ductility of the compacted product and no residual porosity.

As can be seen in the description above, the material object of the present invention offers the substantial advantage of being able to exploit the substantial qualities of aluminium even for containers for cooking with electromagnetic induction heating.

In order to evaluate the scope of the present invention more correctly, it should be considered that, with the material object of the present invention, entire manufactured articles can be produced and not only the disc to be positioned on the bottom of the pot. In this way, a container is obtained, which absorbs electromagnetic waves on all its volume, thus obtaining a better adaptability of the container itself to any type of induction cook top. Regardless of how large the cooking areas are, these can always be exploited at 100%, and there will be no problems concerning the depth of penetration of the skin effect for possible layers of ferromagnetic material which are too thin.

## Claims

1. Container or other manufactured article to be used with electromagnetic induction cookers, comprising at least a portion made of a material with ferromagnetic characteristics; said container or other manufactured article being **characterized in that** said material with ferromagnetic characteristics comprises a powdery composition of a ferromagnetic compound and of Al; the amount of said ferromagnetic compound corresponding at least to the percolation threshold.

2. Container or other manufactured article to be used with electromagnetic induction cookers according to Claim 1, **characterized in that** it is completely made of said material with ferromagnetic characteristics.

3. Container or other manufactured article to be used with electromagnetic induction cookers according to Claim 1 or 2, **characterized in that** said ferromagnetic compound is chosen in the group formed by Fe, Fe203, FeSi and ferritic steel.

4. Container or other manufactured article to be used with electromagnetic induction cookers according to Claim 3, **characterized in that** said material with ferromagnetic characteristics is made of Fe and Al powders; the Fe amount being as much as or more than the amount necessary to reach the Fe percolation threshold.

5. Method for the production of a material with ferromagnetic characteristics for the production of a container or other manufactured article to be used with electromagnetic induction cookers, **characterized in that** it comprises in succession the following steps:
- a mixing step, wherein the powders of a ferromagnetic compound and Al are intimately mixed to avoid the production of lumps and to obtain a homogenous distribution of the powders,
- a compacting step, wherein the mixture obtained in the mixing step is poured into a suitable mould and compacted by exerting a pressure according to the composition, and
- a cooking step, wherein the material deriving from the aforesaid compacting step is heated at a temperature comprised between 180°C and 200°C.

6. Method for the production of a material with ferromagnetic characteristics for the production of a container or other manufactured article to be used with electromagnetic induction cookers, **characterized in that** it comprises in succession the following steps:
- a mixing step, wherein the powders of a ferromagnetic compound and Al are intimately mixed to avoid the production of lumps and to obtain a homogenous distribution of the powders, and
- a hot compacting step, wherein the mixture obtained in the mixing step is poured into a suitable mould and compacted at a temperature comprised between 200°C and 450°C.

7. Method for the production of a material with ferromagnetic characteristics for the production of a container or other manufactured article to be used with electromagnetic induction cookers, **characterized in that** it comprises a hot mixing step, wherein the powders of a ferromagnetic compound are added to molten Al.

8. Material with ferromagnetic characteristics for the production of a container or other manufactured article to be used with electromagnetic induction cookers, made according to any one of Claims 5-7, wherein the amount of said ferromagnetic compound corresponds at least to the percolation threshold.

9. Material with ferromagnetic characteristics according to Claim 8, **characterized in that** said ferromagnetic compound is chosen in the group formed by Fe, Fe203, FeSi and ferritic steel.

10. Material with ferromagnetic characteristics according to Claim 9, **characterized in that** said material with ferromagnetic characteristics is made of Fe and Al powders; the Fe amount being as much as or more than 66% by weight.

## Patentansprüche

1. Gefäß oder sonstiges Erzeugnis für die Verwendung mit elektromagnetischen Induktionsherden, das mindestens einen aus einem Material mit ferromagnetischen Eigenschaften bestehenden Teil umfasst; wobei dieses Gefäß oder sonstige Erzeugnis **dadurch gekennzeichnet ist, dass** das Material mit ferromagnetischen Eigenschaften eine pulverförmige Zusammensetzung aus einer ferromagnetischen Verbindung und Al umfasst; wobei die Menge dieser ferromagnetischen Verbindung mindestens der Perkolationsgrenze entspricht.

2. Gefäß oder sonstiges Erzeugnis für die Verwendung mit elektromagnetischen Induktionsherden nach Anspruch 1, **dadurch gekennzeichnet, dass** es vollständig aus solchem Material mit ferromagnetischen Eigenschaften besteht.

3. Gefäß oder sonstiges Erzeugnis für die Verwendung mit elektromagnetischen Induktionsherden nach Anspruch 1 oder 2, **dadurch gekennzeichnet, dass** die ferromagnetische Verbindung aus der aus Fe, Fe₂O₃, FeSi und ferritischem Stahl gebildeten Gruppe ausgewählt ist.

4. Gefäß oder sonstiges Erzeugnis für die Verwendung mit elektromagnetischen Induktionsherden nach Anspruch 3, **dadurch gekennzeichnet, dass** solches Material mit ferromagnetischen Eigenschaften aus Fe- und Al-Pulvern besteht; wobei die Menge an Fe größer oder gleich der zum Erreichen der Perkolationsgrenze des Fe erforderlichen Menge ist.

5. Verfahren zum Herstellen eines Materials mit ferromagnetischen Eigenschaften für die Herstellung eines Gefäßes oder sonstigen Erzeugnisses für die Verwendung mit elektromagnetischen Induktionsherden, **dadurch gekennzeichnet, dass** es nacheinander die folgenden Schritte umfasst:
- einen Mischschritt, bei dem die Pulver von einer ferromagnetischen Verbindung und Al eng vermischt werden, um die Bildung von Klumpen zu vermeiden und eine homogene Verteilung der Pulver zu erzielen,
- einen Verdichtungsschritt, bei dem das beim Mischschritt erhaltene Gemisch in eine geeignete Form geschüttet und durch Ausüben eines der Zusammensetzung entsprechenden Drucks verdichtet wird, und
- einen Brennschritt, bei dem das dem vorgenannten Verdichtungsschritt entstammende Material auf eine Temperatur zwischen 180°C und 200°C erhitzt wird.

6. Verfahren zum Herstellen eines Materials mit ferromagnetischen Eigenschaften für die Herstellung eines Gefäßes oder sonstigen Erzeugnisses für die Verwendung mit elektromagnetischen Induktionsherden, **dadurch gekennzeichnet, dass** es nacheinander die folgenden Schritte umfasst:
- einen Mischschritt, bei dem die Pulver von einer ferromagnetischen Verbindung und Al eng vermischt werden, um die Bildung von Klumpen zu vermeiden und eine homogene Verteilung der Pulver zu erzielen, und
- einen Heißverdichtungsschritt, bei dem das beim Mischschritt erhaltene Gemisch in eine geeignete Form geschüttet und bei einer Temperatur zwischen 200°C und 450°C verdichtet wird.

7. Verfahren zum Herstellen eines Materials mit ferromagnetischen Eigenschaften für die Herstellung eines Gefäßes oder sonstigen Erzeugnisses für die Verwendung mit elektromagnetischen Induktionsherden, **dadurch gekennzeichnet, dass** es einen Heißmischschritt umfasst, bei dem die Pulver einer ferromagnetischen Zusammensetzung zu geschmolzenem Al hinzugefügt werden.

8. Material mit ferromagnetischen Eigenschaften für die Herstellung eines Gefäßes oder sonstigen Erzeugnisses für die Verwendung mit elektromagnetischen Induktionsherden, das gemäß einem der Ansprüche 5 bis 7 hergestellt wird, wobei die Menge der ferromagnetischen Verbindung mindestens der Perkolationsgrenze entspricht.

9. Material mit ferromagnetischen Eigenschaften nach Anspruch 8, **dadurch gekennzeichnet, dass** die ferromagnetische Verbindung aus der aus Fe, Fe₂O₃, FeSi und ferritischem Stahl gebildeten Gruppe ausgewählt ist.

10. Material mit ferromagnetischen Eigenschaften nach Anspruch 9, **dadurch gekennzeichnet, dass** das Material mit ferromagnetischen Eigenschaften aus Fe- und Al-Pulvern besteht; wobei die Menge an Fe größer oder gleich 66 Gew.-% ist.

## Revendications

1. Récipient ou autre article manufacturé destiné à être utilisé avec des cuiseurs à induction électromagnétique, comprenant au moins une partie constituée d'un matériau avec des caractéristiques ferromagnétiques ; ledit récipient ou autre article manufacturé étant **caractérisé en ce que** ledit matériau avec des caractéristiques ferromagnétiques comprend une composition en poudre d'un composé ferromagnétique et d'Al ; la quantité dudit composé ferromagnétique correspondant au moins au seuil de percolation.

2. Récipient ou autre article manufacturé destiné à être utilisé avec des cuiseurs à induction électromagnétique selon la revendication 1, **caractérisé en ce qu'**il est entièrement constitué par ledit matériau avec des caractéristiques ferromagnétiques.

3. Récipient ou autre article manufacturé destiné à être utilisé avec des cuiseurs à induction électromagnétique selon la revendication 1 ou 2, **caractérisé en ce que** ledit composé ferromagnétique est sélectionné dans le groupe comprenant Fe, Fe₂O₃, FeSi et acier ferritique.

4. Récipient ou autre article manufacturé destiné à être utilisé avec des cuiseurs à induction électromagnétique selon la revendication 3, **caractérisé en ce que** ledit matériau avec des caractéristiques ferromagnétiques est constitué de poudres de Fe et Al ; la quantité de Fe étant égale ou supérieure à la quantité nécessaire pour atteindre le seuil de percolation du Fe.

5. Procédé pour la production d'un matériau avec des caractéristiques ferromagnétiques pour la production d'un récipient ou autre article manufacturé destiné à être utilisé avec des cuiseurs à induction électromagnétique, **caractérisé en ce qu'**il comprend en succession les étapes suivantes :
- une étape de mélange, dans laquelle les poudres d'un composé ferromagnétique et d'Al sont mélangées intimement pour éviter la production d'agglutinements et pour obtenir une distribution homogène des poudres,
- une étape de compactage, dans laquelle le mélange obtenu dans l'étape de mélange est versé dans un moule approprié et compacté en exerçant une pression en fonction de la composition, et
- une étape de cuisson, dans laquelle le matériau obtenu à partir de l'étape de compactage précitée est chauffé à une température comprise entre 180°C et 200°C.

6. Procédé pour la production d'un matériau avec des caractéristiques ferromagnétiques pour la production d'un récipient ou autre article manufacturé destiné à être utilisé avec des cuiseurs à induction électromagnétique, **caractérisé en ce qu'**il comprend en succession les étapes suivantes :
- une étape de mélange, dans laquelle les poudres d'un composé ferromagnétique et d'Al sont mélangées intimement pour éviter la production d'agglutinements et pour obtenir une distribution homogène des poudres, et
- une étape de compactage à chaud, dans laquelle le mélange obtenu dans l'étape de mélange est versé dans un moule approprié et compacté à une température comprise entre 200°C et 450°C.

7. Procédé pour la production d'un matériau avec des caractéristiques ferromagnétiques pour la production d'un récipient ou autre article manufacturé destiné à être utilisé avec des cuiseurs à induction électromagnétique, **caractérisé en ce qu'**il comprend une étape de mélange à chaud, dans laquelle les poudres d'un composé ferromagnétique sont ajoutées à l'Al fondu.

8. Matériau avec des caractéristiques ferromagnétiques pour la production d'un récipient ou autre article manufacturé destiné à être utilisé avec des cuiseurs à induction électromagnétique, réalisé selon l'une quelconque des revendications 5 à 7, dans lequel la quantité dudit composé ferromagnétique correspond au moins au seuil de percolation.

9. Matériau avec des caractéristiques ferromagnétiques selon la revendication 8, **caractérisé en ce que** ledit composé ferromagnétique est sélectionné dans le groupe comprenant Fe, Fe₂O₃, FeSi et acier ferritique.

10. Matériau avec des caractéristiques ferromagnétiques selon la revendication 9, **caractérisé en ce que** ledit matériau avec des caractéristiques ferromagnétiques est constitué de poudres de Fe et Al ; la quantité de Fe étant égale ou supérieure à 66% en poids.
